(19) Europäisches Patentamt
European Patent Office
Office européen des brevets

(11) **EP 2 717 223 A1**

(12) **EUROPEAN PATENT APPLICATION**
published in accordance with Art. 153(4) EPC

(43) Date of publication:
**09.04.2014 Bulletin 2014/15**

(51) Int Cl.:
***G06T 7/00*** (2006.01)

(21) Application number: **12789771.8**

(22) Date of filing: **24.05.2012**

(86) International application number:
**PCT/JP2012/064011**

(87) International publication number:
**WO 2012/161346 (29.11.2012 Gazette 2012/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2011 JP 2011115852**

(71) Applicant: **NEC Corporation
Tokyo 108-8001 (JP)**

(72) Inventors:
• **HAYASAKA, Akihiro
Tokyo 108-8001 (JP)**
• **IMAOKA, Hitoshi
Tokyo 108-8001 (JP)**

(74) Representative: **Vossius & Partner
Siebertstrasse 4
81675 München (DE)**

(54) **INFORMATION PROCESSING DEVICE, INFORMATION PROCESSING METHOD, AND INFORMATION PROCESSING PROGRAM**

(57)     Disclosed is an information processing apparatus capable of performing face recognition with high accuracy. An information processing apparatus, comprising: generation means for generating, based on an original facial image , a plurality of facial images, each of the facial images corresponds to the original facial image facing to a different direction each other; feature value extraction means for extracting feature values of the facial images based on the plurality of facial images generated by the generation means; feature value synthesis means for generating a synthesized feature value by synthesizing the feature values which are extracted by the feature value extraction means; and recognition means for performing face recognition based on the synthesized feature value.

Fig. 1

**Description**

**Technical field**

The present invention relates to an art to recognize a facial image.

**Background art**

A non-Patent Literature 1 discloses a method that, on the basis of an image indicating a face of a person (facial image) who does not face a front direction, a facial image which indicates a state that the person faces the front direction is synthesized, and a general front face recognition algorithm is applied to the synthesized facial image.

However, according to the art disclosed in the non-Patent Literature 1, in a case that an angle of the based facial image with the front direction is large, the facial image facing the front direction may not be synthesized correctly in some cases. In order to solve the problem, according to an art disclosed in a second non-Patent Literature 2, by using a statistical model which is obtained by changing an angle of a person's face little by little, a recognition result of the facial image is unified by performing learning.

[Citation List]

[Non-patent Literature]

[Non-patent Literature 1] Ting Shan, Lovell, B.C., Shaokang Chen, 'Face Recognition Robust to Head Pose from One Sample Image,' ICPR 2006.
[Non- Literature 2] Fu Jie Huang, Zhihua Zhou, Hong-Jiang Zhang, Tsuhan Chen, 'Pose invariant face recognition, ' Automatic Face and Gesture Recognition 2000.

[Technical Problem]

However, the related art mentioned above has a problem that it takes a great deal of time and effort to learn the statistical model per the angle. That is, since it is necessary to prepare quite a large number of the facial images, which indicate various postures of the same person, in order to perform the learning, it is very difficult to collect data and furthermore accuracy in recognition becomes degraded.

An object of the present invention is to provide an art which can solve the above-mentioned problem.

**Summary of Invention**

In order to achieve the object, an apparatus according to the present invention is provided with:

generation means for generating to generate from an original facial image a plurality of facial images, each image showing a face in the original facial image facing a direction that is different from one facial image to another;
first feature value extraction means for extracting extracted feature value of the plural facial images from the plural facial images which are generated by the generation means;
feature value synthesis means for generating a synthesized feature value by synthesizing the feature value which are extracted by the feature value extraction means; and
recognition mean face recognition on the basis of the synthesized feature value.

In order to achieve the object, a method according to the present invention is provided with:

generating from an original facial image a plurality of facial images, each image showing a face in the original facial image facing a direction that is different from one facial image to another;
extracting feature value of the generated plural facial images from the generated plural facial images;
generating a synthesized feature value by synthesizing the extracted feature value; and
performing face recognition on the basis of the generated synthesized feature value.

It is possible to realize the above-mentioned object by using a computer program which makes a computer realize an apparatus or a method corresponding to the above-mentioned composition. Moreover, it is possible to realize the above-mentioned object by using a computer-readable storage medium which stores the computer program.

According to the present invention, it is possible to realize face recognition with high accuracy.

**Brief Description of Drawings**

[Fig. 1]

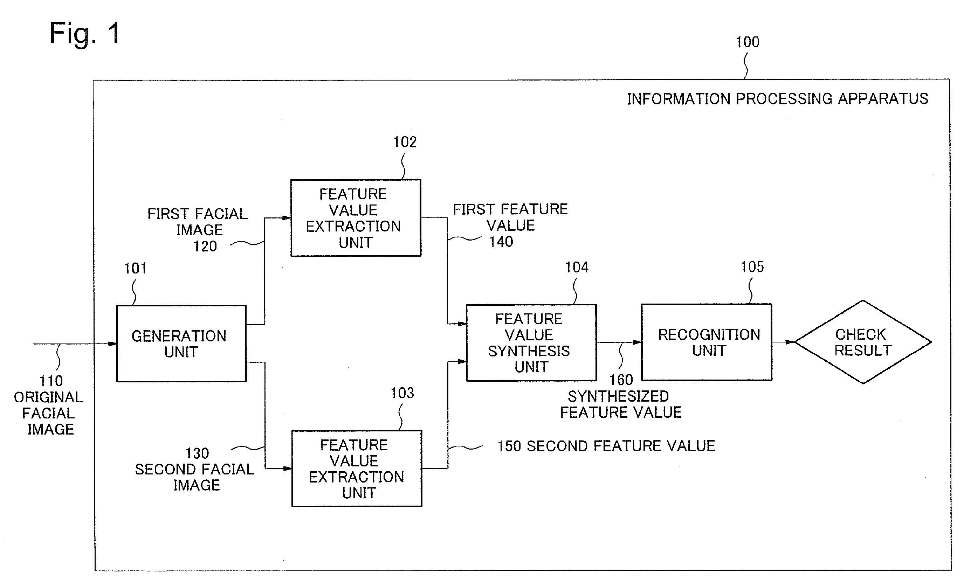

Fig. 1 is a block diagram showing a configuration of an information processing apparatus according to a first exemplary embodiment of the present invention.
[Fig. 2]

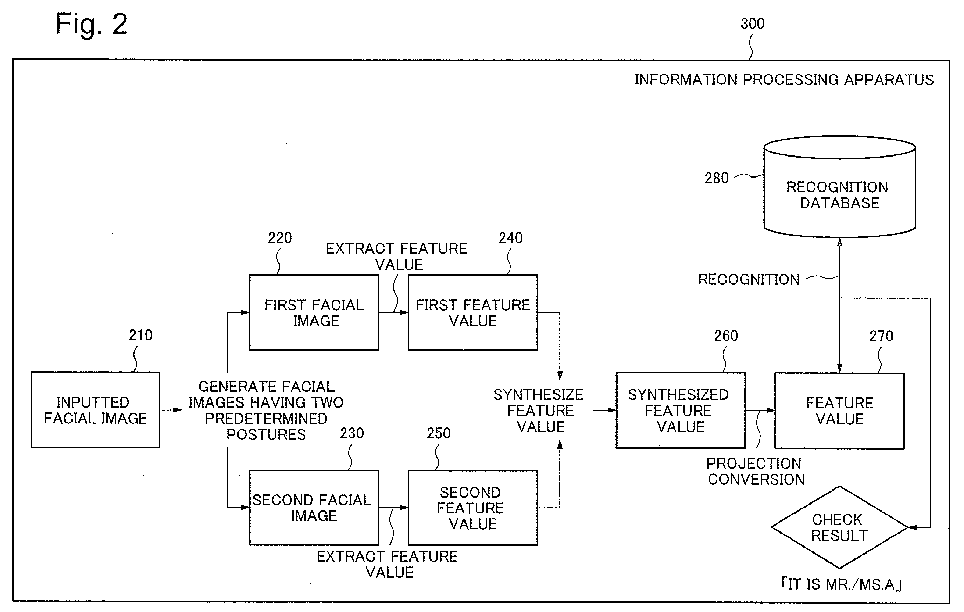

Fig. 2 is a diagram showing an effect of an information processing apparatus according to a second exemplary embodiment of the present invention.
[Fig. 3]

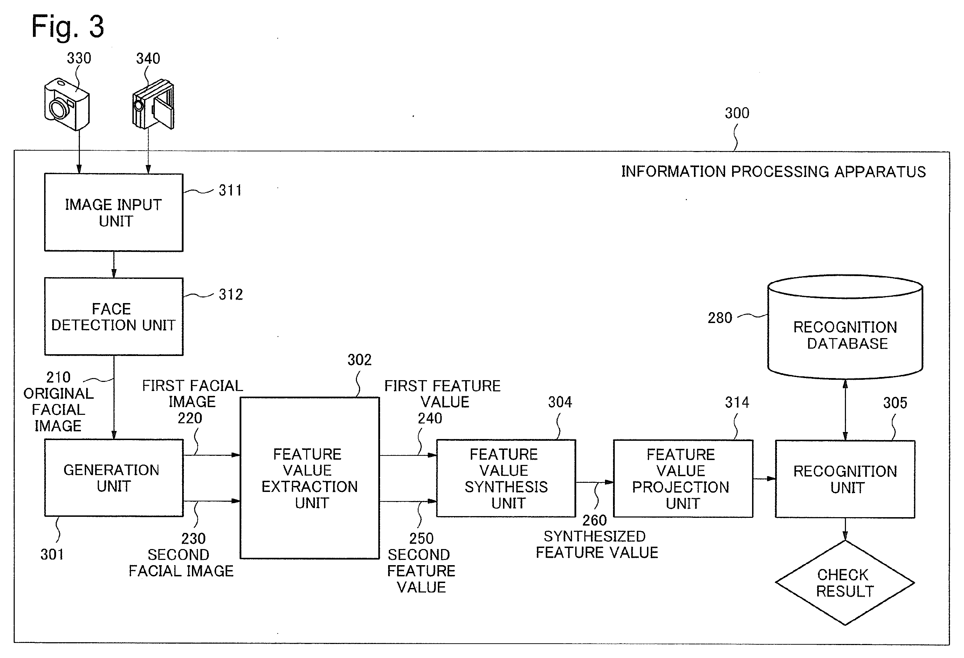

Fig. 3 is a block diagram showing a configuration of the information processing apparatus according to the second exemplary embodiment of the present invention.
[Fig. 4]

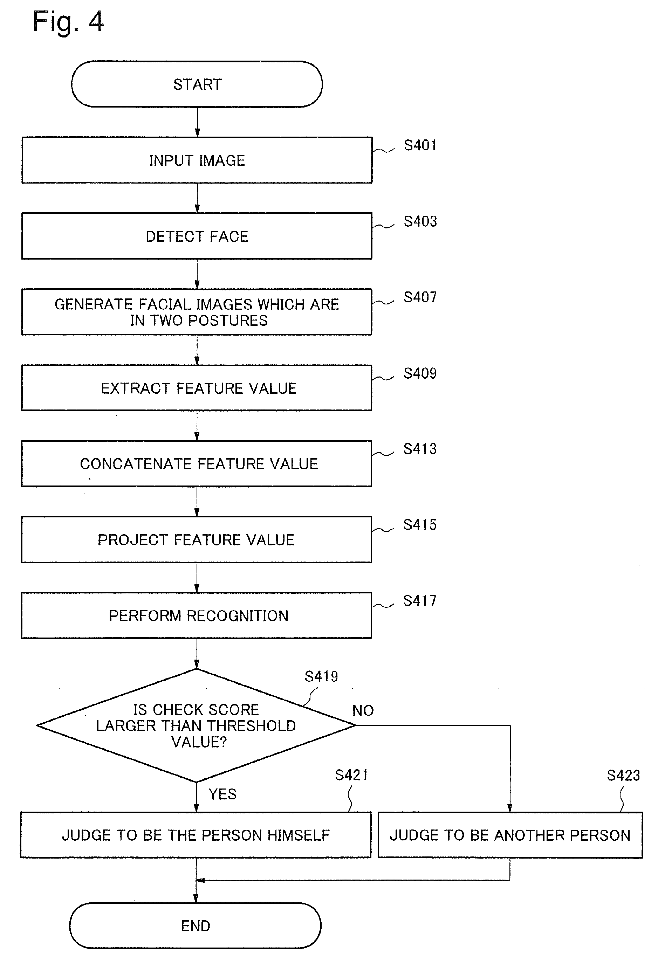

Fig. 4 is a flowchart showing an operation of the information processing apparatus according to the second exemplary embodiment of the present invention.
[Fig. 5]

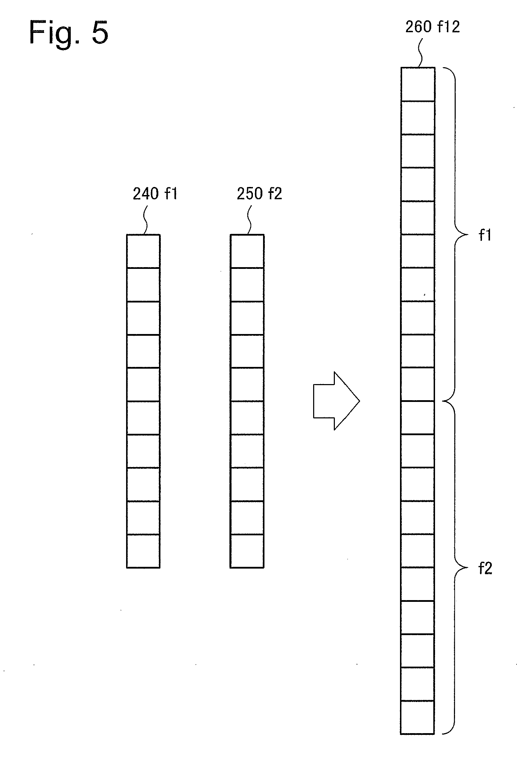

Fig. 5 is a diagram explaining the operation of the information processing apparatus according to the second exemplary embodiment of the present invention.
[Fig. 6]

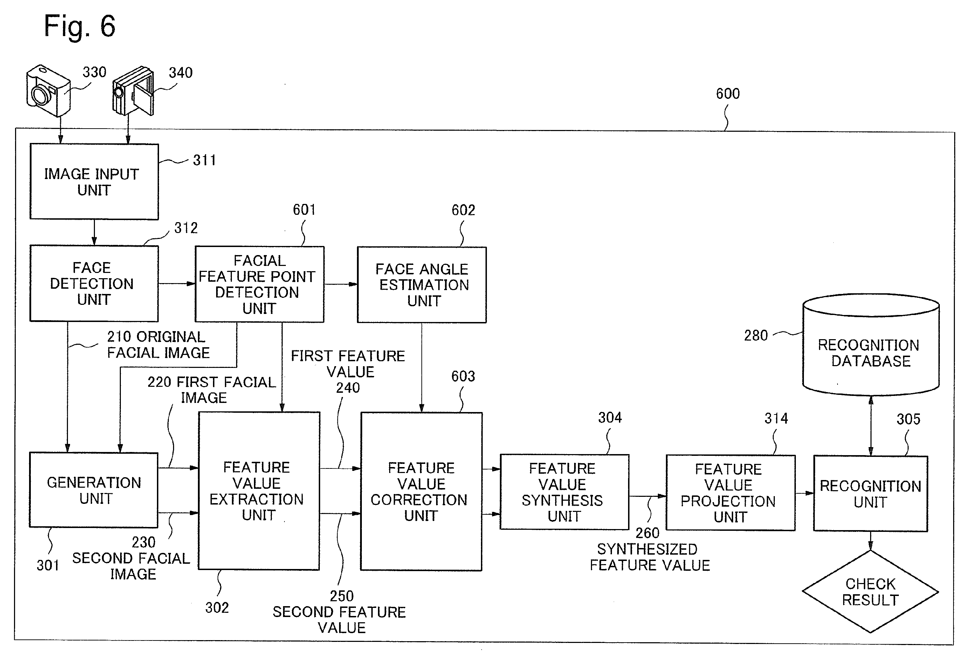

Fig. 6 is a block diagram showing a configuration of an information processing apparatus according to a third exemplary embodiment of the present invention.
[Fig. 7A]

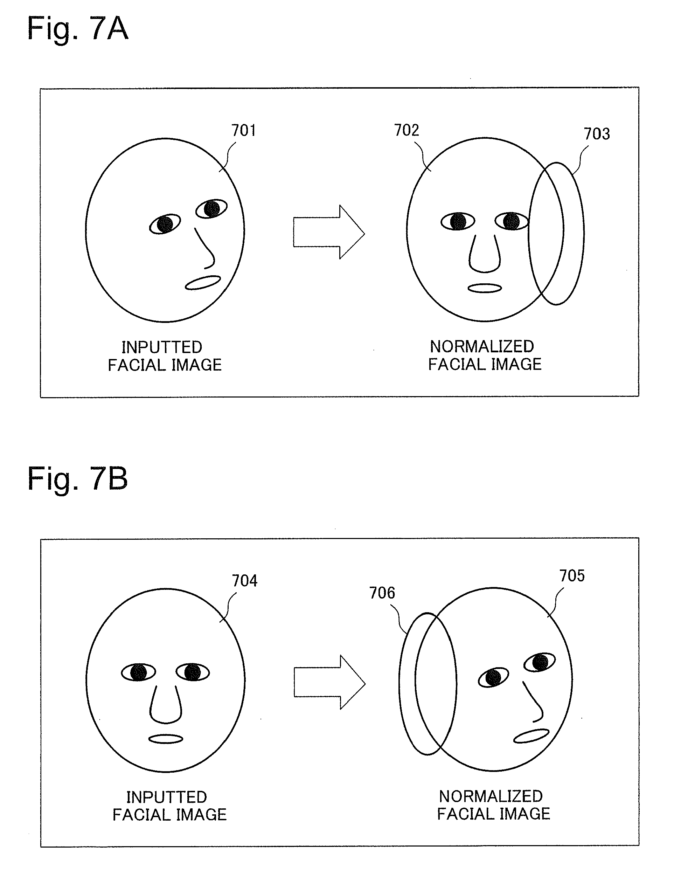

Fig. 7A is a diagram exemplifying a face area which has low accuracy in generation when a generation unit according to the third exemplary embodiment of the present invention generates a facial image.
[Fig. 7B]
Fig. 7B is a diagram exemplifying a face area which has low accuracy in generation when the generation unit according to the third exemplary embodiment of the present invention generates the facial image.
[Fig. 8]

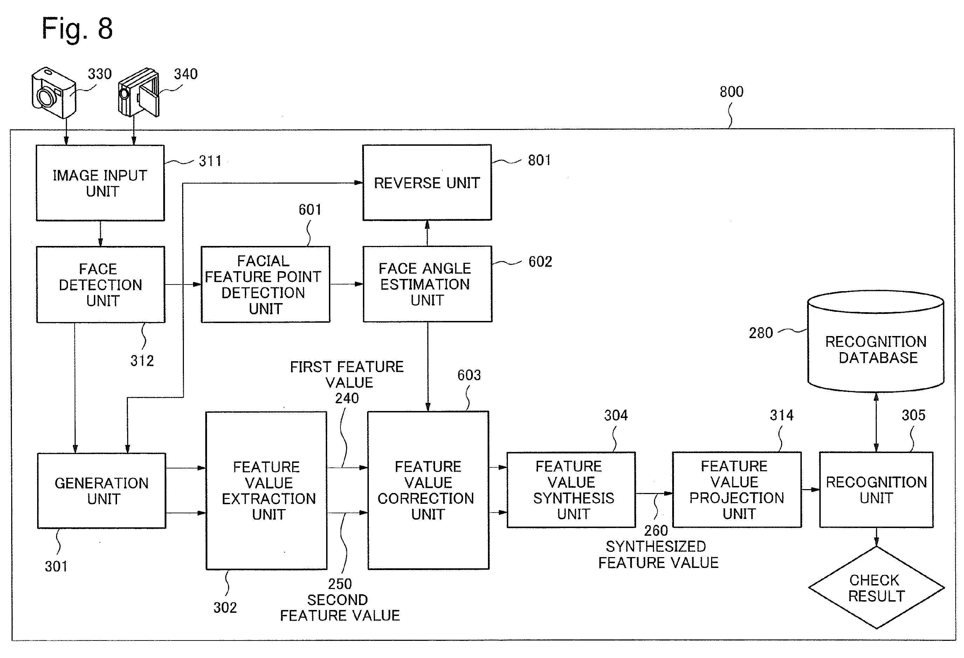

Fig. 8 is a block diagram showing a configuration of an information processing apparatus according to a fourth exemplary embodiment of the present invention.
[Fig. 9]

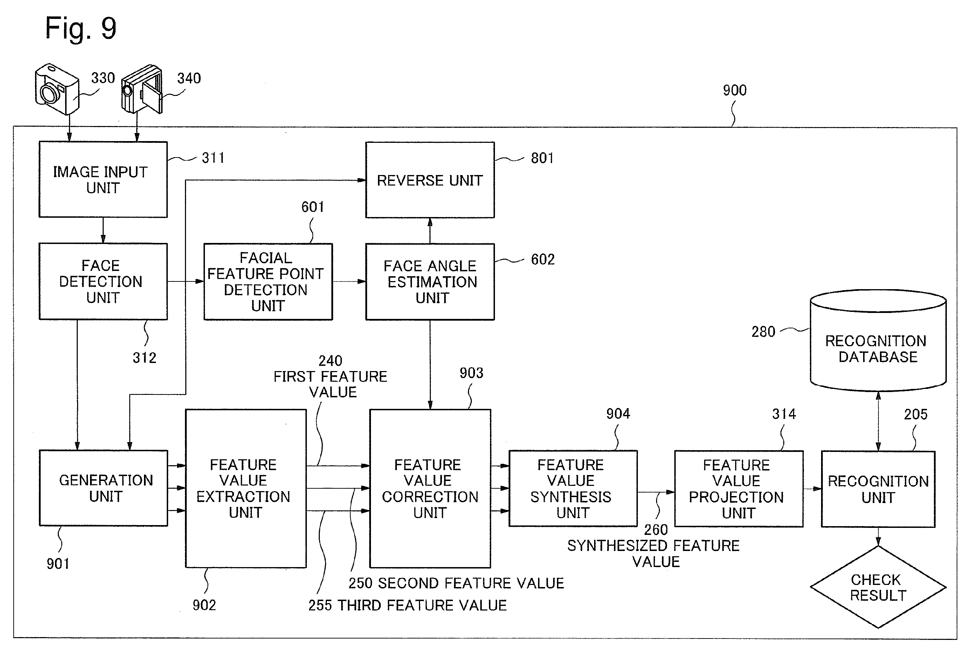

Fig. 9 is a block diagram showing an operation of an information processing apparatus according to a fifth exemplary embodiment of the present invention.
[Fig. 10]

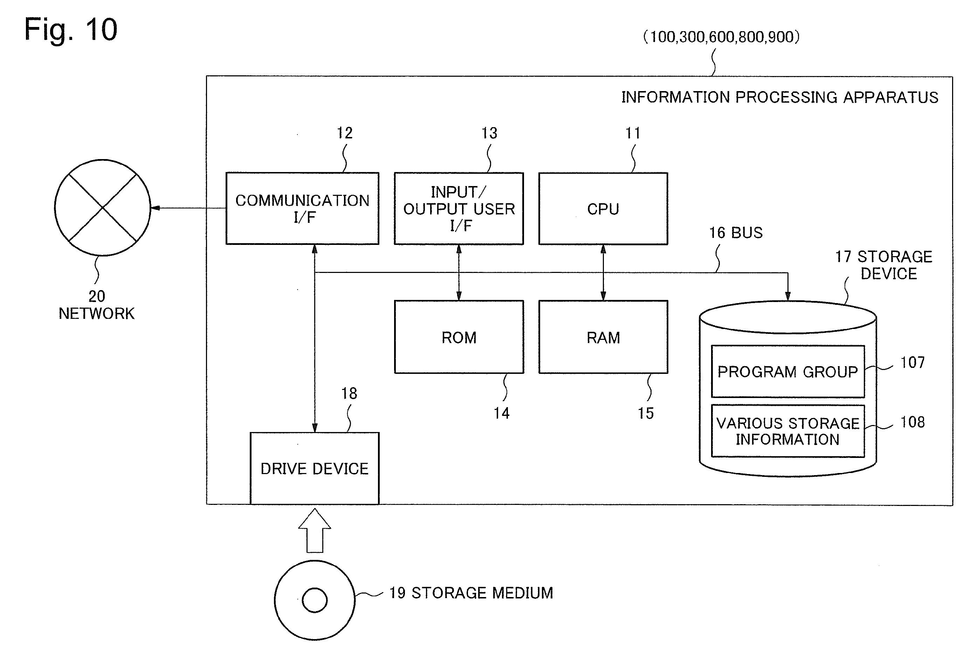

Fig. 10 is a diagram explaining a hardware configuration of a computer (information processing apparatus), which can realize the first to the fifth exemplary embodiments of the present invention, as an example.

**Description of Embodiments**

Hereinafter, exemplary embodiments according to the present invention will be described as an example with reference to drawings. However, components indicated in the following exemplary embodiments are merely exemplified, and there is no intension to make a technical scope limited to only the components.

[First exemplary embodiment]

An information processing apparatus 100 according to a first exemplary embodiment of the present invention will be described with reference to Fig. 1. The information processing apparatus 100 is an apparatus which can recognize a facial image.

As shown in Fig. 1, the information processing apparatus 100 includes a generation unit 101, a feature value extraction unit 102 and 103, a feature value synthesis unit 104 and a recognition unit 105. In a case that each unit is realized by the information processing apparatus 100 which is a computer, each unit can be grasped as a function (process) unit of a software program (computer program) which realizes each unit. However, the configuration in Fig. 1 is shown for convenience of explanation, and implementation is not limited to the configuration (division) (the above is also similar in each exemplary embodiment mentioned later). Moreover, in a case that the information processing apparatus 100 is realized as a stand-alone apparatus, hardware resources of the information processing apparatus 100 will be described later with reference to Fig. 10.

The generation unit 101 generates from an original facial image 110 a plurality of facial images, each image showing a face in the original facial image facing a direction that is different from one facial image to another. A case that two facial images of a first and a second facial images (120 and 130), which are corresponding to the plural facial images, are processing objects will be described in the exemplary embodiment for convenience of explanation. In this case, the generation unit 101 generates the first facial image 120 and the second facial image 130, each of which indicates a face of a person who is indicated in the original facial image 110 and which indicate faces facing different directions each other, on the basis of one original facial image 110. The original facial image 110 may be an image of the face of the person, and may be an image including the face, for example, an image including an upper body of the person. In this case, for example, the generation unit 101 may extract an image, which includes only the face, from the inputted original facial image 110 with a general method.

The feature value t extraction unit 102 extracts a first feature value 140 from the first facial image 120 which is generated by the generation unit 101. Meanwhile, the feature value extraction unit 103 extracts a second feature value 150 from the second facial image 130 which is generated by the generation unit 101.

The feature value synthesis unit 104 generates a synthesized feature value 160 by synthesizing the first feature value 140 and the second feature value 150.

The recognition unit 105 performs face recognition on the basis of the synthesized feature value 160.

According to the information processing apparatus 100 which has the above-mentioned configuration, it is possible to perform the face recognition with high accuracy.

Here, the information processing apparatus 100 according to the exemplary embodiment mentioned above can be grasped as an image processing apparatus which recognizes the facial image. Or, the image processing apparatus may be realized by dedicated hardware.

Moreover, various recognition objects like not only the person but also various animals and dolls can be used as the facial image which the information processing apparatus 100 processes.

[Second exemplary embodiment]

Fig. 2 is a diagram explaining an operation of an information processing apparatus according to a second exemplary embodiment of the present invention. An information processing apparatus 300 inputs a facial image 210, and generates two facial images 220 and 230, whose directions (angle) of front faces are different each other, from the facial image 210. That is, on the basis of the facial image 210, the information processing apparatus 300 generates the facial images 220 and 230 corresponding to images capturing the face, which is indicated in the facial image 210 corresponding to a recognition object, from two different viewpoints.

Here, since a general method is applicable currently to a method for generating a plurality of images, which include faces facing directions different each other, detailed description on the method in the exemplary embodiment is omitted.

Next, the information processing apparatus 300 extracts a first feature value 240 and a second feature value 250 from the first facial image 220 and the second facial image 230 respectively, and generates a synthesized feature value 260 by synthesizing the feature value. The feature value can be expressed in a vector form. For this reason, the feature value may be referred to as a feature vector in some cases in the following description.

Here, as an art of extracting the feature value, for example, the existing method such as the feature value extraction method using Gabor Filter, and the feature value extraction method using Local Binary Pattern may be used. As a feature value extraction method which a feature value extraction unit 302 uses, the same feature value extraction method may be applied to two facial images 220 and 230 with no relation to the direction of face, or different feature value extraction methods suitable for the facial images 220 and 230 respectively, which are generated from the original facial image 210, according to the directions of face indicated in the facial images 220 and 230 may be applied to two facial images 220 and 230 respectively.

Moreover, as an art of synthesizing a plurality of facial images, for example, the existing art such as the geometrical image transformation using the relation between the facial feature points, the three-dimensional geometrical transformation using the three-dimensional shape information of the face or the like may be used. Here, as a method of changing the angle of face in the facial image, the same method may be used with no relation to the angle, or different methods according to the angle may be used.

Next, by performing the projection conversion to the synthesized feature value 260 with using the projection conversion matrix (so-called conversion dictionary), the information processing apparatus 300 generates a feature value 270 which has small digit number (small amount of information).

In the exemplary embodiment, it is assumed that a feature value related to a facial image of a person, who is a recognition object, is registered with a recognition database 280 in advance. In this case, by using the generated feature value 270 with referring to the recognition database 280, the information processing apparatus 300 recognizes (determine), for example, whether it is the person himself corresponding to the facial image 210 or not.

Since two facial images are generated to extract the feature values according to the exemplary embodiment as mentioned above, it is possible to acquire a recognition result with high accuracy. Furthermore, since the conversion into the synthesized feature value 260, which is suitable for identifying an individual, is performed by using the conversion matrix in the exemplary embodiment, the exemplary embodiment has an effect that it is possible to enhance accuracy in recognition, and it is possible to suppress a volume of data of the recognition database 280.

Furthermore, the information processing apparatus 300 according to the exemplary embodiment will be described in detail. Fig. 3 is a diagram explaining a functional configuration of the information processing apparatus 300 according to the second exemplary embodiment. The information processing apparatus 300 includes an image input unit 311, a face detection unit 312, a generation unit 301, a feature value extraction unit 302, a feature value synthesis unit 304, a feature value projection unit 314, a recognition unit 305 and the recognition database 280.

The image input unit 311 can input an image from the outside to the information processing apparatus 300. Specifically, in the exemplary embodiment, the image input unit 311 can acquire an image (image data or image information), which is a processing object, from a digital camera 330, a video camera 340 or the like which acquires an image or a still picture in a real space. Moreover, when being connected with an external record apparatus (not shown in the figure), the image input unit 311 can input an image and a still picture which are stored in the external record apparatus. The face detection unit 312 detects a face area (original facial image 210) out of the image data which is acquired by the image input unit 311. Since a general method at the present time can be adopted for detecting the face area, detailed description on the detection is omitted in the exemplary embodiment (the above is also similar in the following exemplary embodiment).

The generation unit 301 generates the first facial image 220 and the second facial image 230, whose directions of face are different each other, by using the original facial image 210 which is detected by the face detection unit 312. In the following description, the process that the generation unit 301 generates a plurality of facial images from the original facial image 210 may be called 'normalization' in some cases.

Then, in the case that the generation unit 301 performs the normalization, there is a predetermined relation (pattern) between an angle of the direction of face included in the first facial image 220, and an angle of the direction of face included in the second facial image 230. More specifically, a pattern including the first facial image 220 and the second facial image 230, which are generated by the generation unit 301, is shown, for example, in the following.

- a first facial image indicating a face which faces a direction of 15 degrees right, and a second facial image indicating a face which faces a front direction
- a first facial image indicating a face which faces a direction of 15 degrees right, and a second facial image indicating a face which faces a direction of 5 degrees right
- a first facial image indicating a face which faces a direction of 30 degrees left, and a second facial image indicating a face which faces a direction of 10 degrees left.

In the above-mentioned pattern, an angle between the directions of faces indicated in the two facial images may be large from a view point of securing a range where the recognition unit 305, which will be described later, can recognize the face However, in this case, as mentioned later with reference to Fig. 7A and Fig. 7B, when the generation unit 301 performs the normalization into a desired pattern on the basis of the facial image 210 which is focused on, it is a precondition that a part of each of two facial images, which are included in the pattern, does not include a portion which is not included originally in the facial image 210.

The feature value extraction unit 302 extracts the first feature value 240 from the first facial image 220, and extracts the second feature value 250 from the second facial image 230.

The feature value synthesis unit 304 generates the synthesized feature value 260 by synthesizing the first feature value 240 and the second feature value 250. The feature value synthesis unit 304 generates a synthesized feature value (concatenation amount vector) with a method of concatenating amount vectors which are corresponding to the feature values respectively (Fig. 5). Here, the concatenation feature vector, which is generated by the feature value synthesis unit 304, is used when learning of an identification dictionary data. The existing method such as the discriminant analysis may be applied to the concatenation feature vector.

The feature value projection unit 314 generates a projection feature value from the synthesized feature value 260. Specifically, for example, by projecting the concatenation feature vector, which is generated by the feature value synthesis unit 304, on the identification dictionary, the feature value projection unit 314 converts the concatenation feature vector into a projection feature vector which is most suitable for identifying an individual. Here, the learning of the identification dictionary is performed, and the identification dictionary is generated beforehand by using the existing method with using the concatenation feature vector which is generated from learning data.

By referring to the recognition database 280 with using the generated projection feature value, the recognition unit 305 performs a process of recognizing the person's face which is included in the original facial image 210.

The recognition database 280, which stores the projection feature vectors of a plurality of persons, includes a communication means with the recognition unit 305. Moreover, a configuration that the recognition database 280 records the concatenation feature vector and the identification dictionary data per a person who is registered with the database, and the projection feature vector is generated before communication with the recognition unit 305 may be applicable. Moreover, the recognition database 280 may store a plurality of projection feature vectors per a person. Moreover, the following configuration may be used. That is, the recognition database 280 records the concatenation feature vectors of a plurality of persons and the identification dictionary data, and the projection feature vector is generated when communicating with the recognition unit 305, and then the communication is performed. For convenience of explanation, the configuration that the recognition database 280 is arranged inside the information processing apparatus 300 is described as an example in the exemplary embodiment. However, a configuration of the information processing apparatus 300 is not limited to the configuration mentioned above. If the recognition database 280 is connected so as to be able to communicate with the recognition unit 305, a configuration that the recognition database 280 is arranged outside the information processing apparatus 300 may be applicable.

The recognition unit 305 checks the projection feature vector which is acquired by the feature value projection unit 314, and the projection feature vector which is recorded in the recognition database 280, and calculates a check score according to the check result. The existing method such as the method which uses the normalized correlation between the feature vectors, or the method which uses the distance between the feature vectors may be applied to calculating the check score.

The recognition unit 305 recognizes the person indicated in the inputted facial image on the basis of the calculated check score. When the check score is not smaller than a specific threshold value in the case that the normalized correlation is used as the check score, the recognition unit 305 recognizes that a person, who is indicated in the facial image, is just the person himself who is the recognition object. Or, when the check score is not larger than a specific threshold value in the case that the distance is used as the check score, the recognition unit 305 recognizes that a person, who is indicated in the facial image, is just the person himself/herself.

(Description on operation)

Fig. 4 is a flowchart showing a flow of processes performed by the information processing apparatus 300 according to the second exemplary embodiment of the present invention.

First, the image input unit 311 acquires a still picture or a moving picture, which exists in a real space, from the digital camera 330 or the video camera 340 (Step S401). Or, the image input unit 311 may acquire a still picture or a moving picture from a record medium.

When the image input unit 311 inputs the image, the face detection unit 312 detects a face area out of the input image (Step S403).

The generation unit 301 generates the facial images (first facial image 220 and second facial image 230), whose faces are in two predetermined postures (pattern), from the detected facial image (image in the face area) (Step S407).

The feature value extraction unit 302 extracts the feature values, which are effective to identify an individual, from the facial images whose faces are in the specific postures and which are synthesized by the generation unit 301 (Step S409). Then, the feature value synthesis unit 304 concatenates the feature values (Step S413).

Fig. 5 is a diagram showing a state of concatenation of the feature values conceptually. The feature value synthesis unit 304 synthesizes the first feature value 240 (feature vector f1) and the second feature value 250 (feature vector f2) to generate the feature value (synthesized feature value 260 : synthesized feature vector f12 ) as shown in Fig. 5.

Here, when performing the learning of the identification dictionary data which is stored in the recognition database 280, for example, the existing method such as the discriminant analysis may be applied to the concatenation feature vector which is generated by the feature value synthesis unit 304.

The feature value projection unit 314 projects the synthesized feature value, which is generated by the feature value synthesis unit 304, on the identification dictionary (Step S415).

The recognition unit 305 performs the recognition with using the recognition database 280 (Step S417). Then, for example, in the case that the check score is not smaller than a threshold value, the recognition unit 305 recognizes that a person indicated in the original facial image 210 is the person himself who is the recognition object (YES in Step S419, and Step S421). On the other hand, in the case that the check score is not larger than the threshold value as a result of the check, the recognition unit 305 recognizes that a person indicated in the original facial image 210 is another person who is different from the person himself (NO in Step S419, and Step S423).

As mentioned above, according to the exemplary embodiment, two kinds of facial image are generated from the input image, and the feature values are extracted from the generated facial images, and the recognition is performed by using the extracted feature values. For this reason, according to the exemplary embodiment, it is possible to acquire the recognition result with high accuracy.

[Third exemplary embodiment]

An information processing apparatus 600 according to a third exemplary embodiment of the present invention will be described with reference to Fig. 6. The information processing apparatus 600 according to the exemplary embodiment includes furthermore a facial feature point detection unit 601, a face angle estimation unit 602 and a feature value correction unit 603 in addition to the components of the information processing apparatus 300 according to the second exemplary embodiment shown in Fig. 3. Since another configuration and another operation are the same as the configuration and the operation according to the second exemplary embodiment mentioned above, detailed description on the other configuration and the other operation are omitted in the exemplary embodiment by attaching and indicating the same reference number.

The facial feature point detection unit 601 detects a facial feature point from the face area which is detected by the face detection unit 312. Specifically, the facial feature point may be detected, for example, by using the method using the edge information, the method using the AdaBoost algorithm, or the like. The generation unit 301 normalizes the facial image to a facial image, which indicates a certain specific posture, (that is, facial image indicating a face which faces a specific direction) with using the facial feature point information which is detected by the facial feature point detection unit 601.

The face angle estimation unit 602 estimates a direction (angle) of the face, which is indicated in the original facial image 210, from information on the facial feature point which is detected by the facial feature point detection unit 601. As a method of estimating the face angle, for example, the method of estimating the face angle from an identification equipment, which passes for detection, in the method of detecting not-front face which is based on the AdaBoost, or the method of estimating the direction of face from the geometrical positional relation between the detected facial feature points may be used. As the method of estimating the face angle, the generation unit 301 may use posture information, which is estimated by the face angle estimation unit 602, in the process of normalizing the facial image.

The feature value correction unit 603 corrects the feature value, which is extracted by the feature value extraction unit 302, on the basis of the posture information estimated by the face angle estimation unit 602, and the posture information normalized by the generation unit 301.

In the case that there is a large difference between the direction of face (angle) indicated by the inputted original facial image 210, and the posture (angle) of face indicated by each of the facial images (220 and 230) which have been already normalized into the desired pattern as mentioned above, it is impossible to synthesize correctly at least one out of the first facial image 220 and the second facial image 230 with respect to a face area which is not included in the original facial image 210, even if the generation unit 301 performs the normalization. That is, a facial image which has a collapsed texture in a part of the face is synthesized consequently. Additional explanation on the above mention will be given in the following with reference to Fig. 7A and Fig. 7B.

Each of Fig. 7A and Fig. 7B is a diagram exemplifying a face area which has low accuracy in generation of a facial image when a generation unit according to the third exemplary embodiment of the present invention generates the facial image. For example, as shown in Fig. 7A, a case that a facial image 701 (original facial image 210), which indicates a face facing a direction of 30 degrees right, is normalized to a facial image 702 (first facial image 220 and second facial image 230) which indicates a face facing a front direction is considered. In this case, the generation unit 301 cannot synthesize the facial image correctly with respect to a face area 703, which does not come out in the original facial image 210, in the normalization process. Moreover, for example, as shown in Fig. 7B, a case that a facial image 704 (original facial image 210), which indicates a face facing a front direction, is normalized to a facial image 705 (first facial image 220 and second facial image 230) which indicates a face facing a direction of 30 degrees right is considered. In this case, when the generation unit 301 performs the normalization, a texture 706 of a right side surface of the face, which does not come out originally in a base image, may be mingled with a background or the like. Since the face and the background are deformed into forms different from the original forms in the normalization process which uses three-dimensional shape of the face or the like, textures of the background and a face edge collapse severely. As a result, the feature value, which is extracted from such the area, causes a disturbance to identifying an individual correctly.

Then, according to the exemplary embodiment, correction which reduces influence due to the face area, which is not generated correctly, is performed. In other words, correction which reduces the feature value of the face area which has low accuracy in generation of the facial image performed by the generation unit 301. Specifically, the feature value correction unit 603 calculates a difference in angle between the posture which is estimated by the face angle estimation unit 602, and the posture (first facial image 220 and second facial image 230) which is acquired by the normalization performed by the generation unit 301. Then, the feature value correction unit 603 determines a weight coefficient, which is multiplied by the feature value, according to a polarity and largeness of the calculated difference in angle. That is, the feature value correction unit 603 determines on the basis of the polarity of the difference in angle which direction the inputted image faces out of a right direction and a left direction of a referential direction of the posture (angle) of the facial image which is acquired by the normalization. Next, the feature value correction unit 603 determines a position of the face area to which the correction should be added, and judges a degree of difference of the direction of the inputted image from the direction of the posture of the image, which is acquired by the normalization, on the basis of the largeness of the difference in angle. As a result, the feature value correction unit 603 determines a range of the face area to which the correction should be added.

The weight coefficient may be determined so that each feature value in a correction area may be made zero, or and the weight coefficient may be changed according to a probability as moving from the inside to the outside of the facial area with taking the posture into consideration. However, in the case of making all of the feature values in the correction area zero, since correlation between the feature values whose values are zero is strong, further consideration is needed when the recognition unit 305 calculates the check score. When the weight coefficient determined in this way is denoted as w, the weight coefficient w has the same dimensions as a feature value (feature vector) f has. Next, when a weight matrix whose diagonal component is the weight coefficient w is denoted as W, a feature vector after correction f' is expressed by the following formula (1).

$$f' = W \times f \ldots\ldots\ldots (1)$$

The formula (1) expresses that the feature vector after correction f' is found out by multiplying the feature vector f by the weight matrix W. However, the feature vector after correction f' is not limited to the formula mentioned above. For example, the feature vector after correction f' may be found out by multiplying each component of the feature vector f by each corresponding component of the weight coefficient w.

That is, the feature value correction unit 603 performs the correction process mentioned above. In a case that the feature values extracted by the feature value extraction unit 302 are different each other, it is preferable to perform the normalization process to each feature value before multiplying the weight coefficient.

Then, the feature value synthesis unit 304 generates a concatenation feature vector by concatenating the feature vectors, which are corrected by the feature value correction unit 603, in the exemplary embodiment.

As described above, according to the configuration and the operation in the exemplary embodiment, the information processing apparatus 600 normalizes the inputted facial image to a plurality of faces (face facing a slant direction) which are in the specific postures including to face the front direction, and corrects the respective feature vectors extracted from the facial images, which is acquired by the normalization, with using the posture information (angle information) of the inputted facial image. Then, the information processing apparatus 600 performs the learning of the distinction dictionary with using the concatenation feature vector which is acquired by concatenating the respective feature vectors. More specifically, the information processing apparatus 600 estimates firstly the posture (direction and angle) of the face, which is indicated in the inputted facial image, on the basis of the inputted facial image. In the case that there is a large difference between the posture of the facial image which is acquired by the normalization, and the estimated posture, a synthesis failure area, where the synthesized image collapses, appears as mentioned above. For this reason, the information processing apparatus 600 according to the exemplary embodiment performs the correction so as to reduce an influence due to the feature value related to the area. Then, the information processing apparatus 600 performs the learning with using the concatenation feature vector which is acquired by concatenating the corrected feature vectors respectively. As a result, according to the exemplary embodiment, it is possible to realize the learning with reducing bad influence due to the noise. Moreover, according to the exemplary embodiment, it is possible to perform the accurate recognition to the facial images, which are in many postures, by using the learned identification dictionary.

[Fourth exemplary embodiment]

A fourth exemplary embodiment of the present invention will be described with reference to Fig. 8. Fig. 8 is a block diagram showing a configuration of an information processing apparatus according to the fourth exemplary embodiment of the present invention. An information processing apparatus 800 according to the exemplary embodiment is different from one according to the third exemplary embodiment mentioned above in a point that the information processing apparatus 800 includes furthermore a reverse unit 801 in addition to the component included in the configuration of the information processing apparatus 600 shown in Fig. 6. Since another configuration and another operation are the same as ones according to the third exemplary embodiment mentioned above, detailed description on the other configuration and the other operation are omitted in the exemplary embodiment by attaching and indicating the same reference number.

The reverse unit 801 compares the direction of the face which is indicated in the original facial image and which is acquired in the face angle estimation process, and the angle of the face which should be normalized by the generation unit 301. Then, in the case that the posture of the inputted image (direction of the face indicated in the original facial image), and the posture, which should be normalized, face directions which are reverse each other in comparison with the front direction (that is, right direction and left direction of the front direction, or vice versa), the reverse unit 801 reverses the inputted image from the right to the left or vice versa, and afterward performs the normalization process and the following process.

For example, the following situation is considered. That is, the situation is that a pattern including a facial image facing the front direction, and a facial image facing a direction of 30 degrees right, which is generated by the generation unit 301 in the normalization process, is set. At this time, according to the exemplary embodiment, in the case that the face indicated in the inputted original facial image 210 faces a direction of 20 degrees left, instead of performing a large change in angle by 20 degrees right and 50 degrees right, the reverse unit 801performs a process of reverse from a left direction to a right direction or vice versa. That is, a facial image indicating a face, which faces a direction of 30 degrees right, is generated by reversing the facial image, which indicates the face facing the direction of 20 degrees left, in a direction of 20 degrees right, and performing afterward a process of changing the angle by 10 degrees right. As a result, according to the exemplary embodiment, the generation unit 301 can generate the facial image more accurately, and consequently it is also possible to extract many effective feature values.

[Fifth exemplary embodiment]

A fifth exemplary embodiment according to the present invention will be described with reference to Fig. 9. Fig. 9 is a block diagram showing an operation of an information processing apparatus according to the fifth exemplary embodiment of the present invention. Differently from each the exemplary embodiment mentioned above, an information processing apparatus 900 according to the exemplary embodiment normalizes the inputted facial image to a pattern including three facial images each of which is in a posture (angle) different each other out of three specific postures. For this reason, the information processing apparatus 900 is different from one according to the fourth exemplary embodiment in a point that the information processing apparatus 900 includes a generation unit 901, a feature extraction unit 902, a feature value correction unit 903 and a feature value synthesis unit 904 instead of the generation unit 301, the feature extraction unit 302, the feature value correction unit 603 and the feature value synthesis unit 304 which are included in the configuration of the information processing apparatus 800 shown in Fig. 8. Since another configuration and another operation are the same as ones according to the fourth exemplary embodiment mentioned above, detailed description on the other configuration and the operation are omitted in the exemplary embodiment by attaching and indicating the same reference number.

In the exemplary embodiment, the generation unit 901 generates three facial images indicating faces each of which is in a specific posture (angle) different each other out of three specific postures. In response to this, the feature value extraction unit 902 extracts three feature values (240, 250 and 255) from three facial images with using the same procedure as one according to each exemplary embodiment mentioned above. The feature value correction unit 903 corrects these three feature values (feature vector) appropriately with using the same procedure as one according to the fourth exemplary embodiment mentioned above. Then, the feature value synthesis unit 904 generates a concatenation feature vector, which concatenates three corrected feature values (feature vector), from three corrected feature values with using the same procedure as one according to each exemplary embodiment mentioned above.

According to the exemplary embodiment, it is possible to check the facial images, which are in many postures, on the basis of small amount of information by normalizing the inputted facial image to the facial images each of which includes the face having the specific angle different each other out of three specific angles. Moreover, according to the exemplary embodiment, it is possible to reduce influence on an area, where the normalization of the facial image is failed due to the large difference between the postures, by performing the correction to the plural feature vectors, which are extracted from the facial image, with taking the difference in angle from the inputted facial image into consideration.

Moreover, according to the exemplary embodiment, each feature vector is learned in more multiple-dimensional space by using the concatenation feature vector which concatenates the corrected feature vectors. As a result, according to the exemplary embodiment, since it is possible to select the important dimension precisely from the feature vectors corresponding to a plurality of postures, the optimum integration, which cannot be realized by the check score level, is realized. Meanwhile, according to the exemplary embodiment, since it is possible to check the facial images corresponding to a plurality of postures by using a small number of identification dictionaries, it is possible to reduce data volume and to shorten a time required in the check process.

Here, for convenience of explanation, the normalization to the pattern including three postures is described in the exemplary embodiment. However, the present invention is not limited to the configuration and may use more plural facial images.

[Another exemplary embodiment]

The exemplary embodiment according to the present invention is described in detail as mentioned above.

Furthermore, a system or an apparatus, which is realized by combining any features of the exemplary embodiments, is also included in the scope of the present invention.

Moreover, the present invention may be applied to a system including a plurality of equipment or may be applied to a stand-alone apparatus. Furthermore, the present invention is applicable to a case that an information processing program (software program and computer program), which realizes the function defined in the exemplary embodiment, is supplied directly or remotely to a system which includes a plurality of computers, or to a stand-alone computer. Accordingly, a program which is installed in a computer and which makes the computer realize the function of the present invention, a medium which stores the program, and a WWW (World Wide Web) server which makes the program downloaded are also included in the scope of the present invention. A specific example in this case will be described with reference to Fig. 10.

<Example of hardware configuration>

A case that the apparatus according to each the exemplary embodiment mentioned above is realized by a stand-alone resource will be exemplified and described. Fig. 10 is a diagram explaining a hardware configuration of a computer (information processing apparatus), which can realize the first to the fifth exemplary embodiments of the present invention, as an example.

The hardware of the information processing apparatus (100, 300, 600, 800 or 900) shown in Fig. 10 includes a CPU 11, a communication interface (I/F) 12, an input/output user interface 13, ROM (Read Only Memory) 14, RAM (Random Access Memory) 15, a storage device 17, and a drive device 18 of a storage medium 19 which are connected each other through a bus 16. The input/output user interface 13 is a man-machine interface such as a keyboard which is an example of an input device, a display which is an output device, or the like. The communication interface 13 is a general communication means which is used for communication of the apparatus according to each of the exemplary embodiments (Fig. 1, Fig. 3, Fig. 6, Fig. 8 and Fig. 9) with an external apparatus through a communication network 20. In the hardware configuration, CPU 11 controls a whole of operation performed by the information processing apparatus according to the each exemplary embodiment.

Then, the present invention, which is described with exemplifying the first to the fifth exemplary embodiments mentioned above, is achieved by supplying the information processing apparatus shown in Fig. 10 with a program which can realize the function of the flowchart (Fig. 4) referred to in the description of the present invention, or each unit (each block) of the apparatuses shown in the block diagrams of Fig. 1, Fig. 3, Fig. 6, Fig. 8 and Fig. 9, and by reading the program afterward to make CPU 11 execute the program. Moreover, it is preferable that the program supplied to the information processing apparatus is stored in a temporary storage device (15) which is readable and write-able, or in a non-volatile storage device (17) such as a hard disk drive or the like.

That is, a program group 107 stored in the storage device 17 is, for example, a group of programs which can realize the function of each unit shown in the block diagram according to each exemplary embodiment mentioned above (however, at least, the image input unit 311 and the recognition unit 305 use the communication interface 12 and the input/output user interface 13, which include hardware, together with the program). Moreover, various storage information 108 includes, for example, the learning result, the identification dictionary, the information indicating the specific pattern (posture) in the normalization process, and the like, which the recognition database 280 stores, in each exemplary embodiment mentioned above.

In this case, it is possible to adopt a procedure, which is general at the present time like a method of installing the program in the apparatus via various computer-readable record media 19 such as CD-ROM, a flash memory or the like, or a method of downloading the program from the outside through the communication circuit 20 such as the internet or the like. Furthermore, in this case, it is possible to recognize that the present invention is realized by codes composing the computer program, or by the storage device 19 storing the codes.

As mentioned above, the present invention is described with exemplifying the exemplary embodiment mentioned above as an exemplary example. However, the present invention is not limited to the exemplary embodiment mentioned above. That is, the present invention can apply various embodiments, which a person skilled in the art can understand, in the scope of the present invention.

This application is based upon and claims the benefit of priority from Japanese Patent Application No. 2011-115852 filed on May 24, 2011, the disclosure of which is incorporated herein in its entirety by reference.

Reference Signs List

11                                    CPU

| | |
|---|---|
| 12 | communication interface (I/F) |
| 13 | input/output interface (I/F) |
| 14 | ROM |
| 15 | RAM |
| 16 | bus |
| 17 | storage apparatus (storage device) |
| 18 | drive device |
| 19 | storage medium |
| 20 | communication network |
| 100, 300, 600, 800, and 900 | information processing apparatus (computer) |
| 101, 301 and 901 | generation unit |
| 102, 103, 302 and 902 | feature value extraction unit |
| 104, 304 and 904 | feature value synthesis unit |
| 105 and 305 | recognition unit |
| 107 | program group |
| 108 | various storage information |
| 110 | original facial image |
| 120 and 220 | first facial image |
| 130 and 230 | second facial image |
| 140 and 240 | first feature value |
| 150 and 250 | second feature value |
| 160 and 260 | synthesized feature value |
| 210 | inputted facial image |
| 255 | third feature value |
| 270 | feature value |
| 280 | recognition database |
| 311 | image input unit |
| 312 | face detection unit |
| 314 | feature value projection unit |

| 330 | digital camera |
| 340 | video camera |
| 601 | facial feature point detection unit |
| 602 | face angle estimation unit |
| 603 and 903 | feature value correction unit |
| 701, 702, 704 and 705 | facial image |
| 703 | face area |
| 706 | texture |
| 801 | reverse unit |
| 903 | feature value correction unit |

**Claims**

1. An information processing apparatus, comprising:

   generation means for generating, based on an original facial image, a plurality of facial images, each of the facial images corresponds to the original facial image facing to a different direction each other;
   feature value extraction means for extracting feature values of the facial images based on the plurality of facial images generated by the generation means;
   feature value synthesis means for generating a synthesized feature value by synthesizing the feature values which are extracted by the feature value extraction means; and
   recognition means for performing face recognition based on the synthesized feature value.

2. The information processing apparatus according to claim 1, further comprising:

   feature value projection means for reducing an amount of information of the synthesized feature value by performing a projection conversion to the synthesized feature value.

3. The information processing apparatus according to claim 1 or 2, further comprising:

   feature value correction means for performing correction so as to decrease a feature value of a face area, which has low accuracy in the plurality of generation, in the plurality of facial images.

4. The information processing apparatus according to claim 3, wherein
   on the basis of a difference in angle between a direction of a face indicated in the original facial image and a direction of a face indicated in each of a plurality of the facial images which are generated by the generation means, the feature value correction means corrects feature values of the plurality of facial images.

5. The information processing apparatus according to any one of claims 1 to 4, further comprising:
   detection means for detecting the original facial image from an input image.

6. The information processing apparatus according to any one of claims 1 to 5, further comprising:

   feature point detection means for detecting a facial feature point from the original facial image, wherein
   the generation means generates the plurality of facial images by using the facial feature point.

7. The information processing apparatus according to any one of claims 1 to 6, further comprising:

reverse means for reversing the original facial image in accordance with an angle between a direction of a face indicated in the original facial image and a direction of a face indicated in each of plural facial images which the generation means should generate.

8. The information processing apparatus according to any one of claims 1 to 7, wherein
The generation means generates a first facial image and a second facial image as the plurality of facial images based on the original facial image,
the feature value extraction means extracts a first feature value which is related to the first facial image and a second feature value relating to the second facial image, as the feature value, and
the feature value synthesis means generates the synthesized feature value by synthesizing the first feature value and the second feature value.

9. An information processing method, comprising:

generating a plurality of facial images based on an original facial image, each of the face images corresponds to the original facial image is facing to a different direction each other;
extracting feature values which are relating to the generated plurality of facial images, based on the generated plurality of facial images;
generating a synthesized feature value by synthesizing the extracted feature values; and
performing face recognition based on the generated synthesized feature value.

10. A computer program which makes a computer to execute:

a generation function to generate, based on an original facial image, a plurality of facial images, corresponding to the original facial, the each of the plurality and is facing to a different direction each other;
a feature value extraction function to extract feature values, which are related to the generated plurality facial images, from the generated plural facial images by the generation function;
a feature value synthesis function to generate a synthesized feature value by synthesizing the feature values which are extracted by the feature value extraction function; and
a recognition function to perform a face recognition based on the synthesized feature value.

## Fig. 1

# Fig. 2

INFORMATION PROCESSING APPARATUS

300

280 — RECOGNITION DATABASE

RECOGNITION

220
EXTRACT FEATURE VALUE
240

FIRST FACIAL IMAGE

FIRST FEATURE VALUE

210
INPUTTED FACIAL IMAGE

GENERATE FACIAL IMAGES HAVING TWO PREDETERMINED POSTURES

230    250

SYNTHESIZE FEATURE VALUE

260
SYNTHESIZED FEATURE VALUE

270
FEATURE VALUE

PROJECTION CONVERSION

SECOND FACIAL IMAGE

SECOND FEATURE VALUE

EXTRACT FEATURE VALUE

CHECK RESULT

「IT IS MR./MS.A」

**Fig. 3**

# Fig. 4

```
                    ┌─────────────────┐
                    │      START      │
                    └─────────────────┘
                             │
                             ▼
        ┌──────────────────────────────────────┐      S401
        │           INPUT IMAGE                 │
        └──────────────────────────────────────┘
                             │
                             ▼
        ┌──────────────────────────────────────┐      S403
        │           DETECT FACE                 │
        └──────────────────────────────────────┘
                             │
                             ▼
        ┌──────────────────────────────────────┐      S407
        │  GENERATE FACIAL IMAGES WHICH ARE     │
        │         IN TWO POSTURES               │
        └──────────────────────────────────────┘
                             │
                             ▼
        ┌──────────────────────────────────────┐      S409
        │        EXTRACT FEATURE VALUE          │
        └──────────────────────────────────────┘
                             │
                             ▼
        ┌──────────────────────────────────────┐      S413
        │      CONCATENATE FEATURE VALUE        │
        └──────────────────────────────────────┘
                             │
                             ▼
        ┌──────────────────────────────────────┐      S415
        │        PROJECT FEATURE VALUE          │
        └──────────────────────────────────────┘
                             │
                             ▼
        ┌──────────────────────────────────────┐      S417
        │        PERFORM RECOGNITION            │
        └──────────────────────────────────────┘
                             │
                             ▼
                        S419 ◇
              IS CHECK SCORE            NO
          LARGER THAN THRESHOLD ──────────────┐
                 VALUE?                        │
                    │ YES                      │
              S421  ▼                    S423  ▼
    ┌─────────────────────────────┐  ┌─────────────────────────────┐
    │ JUDGE TO BE THE PERSON      │  │ JUDGE TO BE ANOTHER PERSON  │
    │ HIMSELF                     │  │                             │
    └─────────────────────────────┘  └─────────────────────────────┘
                    │                        │
                    ▼◄───────────────────────┘
             ┌─────────────────┐
             │       END       │
             └─────────────────┘
```

# Fig. 5

260 f12

240 f1    250 f2

f1

f2

Fig. 6

EP 2 717 223 A1

# Fig. 7A

701

702

703

INPUTTED
FACIAL IMAGE

NORMALIZED
FACIAL IMAGE

# Fig. 7B

704

706

705

INPUTTED
FACIAL IMAGE

NORMALIZED
FACIAL IMAGE

# Fig. 8

- 330
- 340
- 800
- IMAGE INPUT UNIT ~ 311
- REVERSE UNIT ~ 801
- FACE DETECTION UNIT ~ 312
- FACIAL FEATURE POINT DETECTION UNIT ~ 601
- FACE ANGLE ESTIMATION UNIT ~ 602
- 280
- RECOGNITION DATABASE
- FIRST FEATURE VALUE 240
- 603
- 304
- 314
- 305
- GENERATION UNIT ~ 301
- FEATURE VALUE EXTRACTION UNIT ~ 302
- FEATURE VALUE CORRECTION UNIT
- FEATURE VALUE SYNTHESIS UNIT
- FEATURE VALUE PROJECTION UNIT
- RECOGNITION UNIT
- 250 SECOND FEATURE VALUE
- 260 SYNTHESIZED FEATURE VALUE
- CHECK RESULT

# Fig. 9

# Fig. 10

(100,300,600,800,900)

## INFORMATION PROCESSING APPARATUS

20
NETWORK

12
COMMUNICATION
I/F

13
INPUT/
OUTPUT USER
I/F

11
CPU

16 BUS

17 STORAGE
DEVICE

18
DRIVE DEVICE

14
ROM

15
RAM

PROGRAM GROUP — 107

VARIOUS STORAGE
INFORMATION — 108

19 STORAGE MEDIUM

EP 2 717 223 A1

<table>
<tr><td colspan="2" align="center">**INTERNATIONAL SEARCH REPORT**</td><td>International application No.<br>PCT/JP2012/064011</td></tr>
</table>

| A. CLASSIFICATION OF SUBJECT MATTER |
|---|
| *G06T7/00*(2006.01)i |
| |
| According to International Patent Classification (IPC) or to both national classification and IPC |

| B. FIELDS SEARCHED |
|---|
| Minimum documentation searched (classification system followed by classification symbols) |
| G06T7/00 |
| |

| Documentation searched other than minimum documentation to the extent that such documents are included in the fields searched |
|---|
| Jitsuyo Shinan Koho          1922–1996    Jitsuyo Shinan Toroku Koho    1996–2012<br>Kokai Jitsuyo Shinan Koho    1971–2012    Toroku Jitsuyo Shinan Koho    1994–2012 |

| Electronic data base consulted during the international search (name of data base and, where practicable, search terms used) |
|---|
| |

**C. DOCUMENTS CONSIDERED TO BE RELEVANT**

| Category* | Citation of document, with indication, where appropriate, of the relevant passages | Relevant to claim No. |
|---|---|---|
| A | JP 2000-331207 A  (Omron Corp.),<br>30 November 2000 (30.11.2000),<br>paragraphs [0027] to [0029]; fig. 4<br>(Family: none) | 1-10 |
| A | JP 2009-43065 A  (Panasonic Corp.),<br>26 February 2009 (26.02.2009),<br>claim 1; fig. 2<br>(Family: none) | 1-10 |
| A | JP 2006-146323 A  (Matsushita Electric<br>Industrial Co., Ltd.),<br>08 June 2006 (08.06.2006),<br>claim 1; fig. 3<br>& US 2009/0052747 A1    & WO 2006/054598 A1<br>& CN 101057256 A | 1-10 |

☐ Further documents are listed in the continuation of Box C.      ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>02 July, 2012 (02.07.12) | Date of mailing of the international search report<br>10 July, 2012 (10.07.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011115852 A

**Non-patent literature cited in the description**

- **TING SHAN ; LOVELL, B.C. ; SHAOKANG CHEN.** Face Recognition Robust to Head Pose from One Sample Image. *ICPR,* 2006

- **FU JIE HUANG ; ZHIHUA ZHOU ; HONG-JIANG ZHANG ; TSUHAN CHEN.** Pose invariant face recognition. *Automatic Face and Gesture Recognition,* 2000